# EUROPEAN PATENT SPECIFICATION

(11) **EP 2 214 884 B1**
(45) Date of publication and mention of the grant of the patent: **04.01.2012**
(21) Application number: 08841808.2
(22) Date of filing: 21.10.2008
(51) Int. Cl.: B29C 45/27, F16F 1/32

(54) **Improved distribution plate for a mould for the injection moulding of plastic materials**
Verbesserung einer Verteilerplatte für ein Formwerkzeug zum Spritzgiessen von Kunststoffmaterialien
Plaque de distribution améliorée destinée à un moule servant au moulage par injection de matières plastiques

(30) Priority: 23.10.2007 IT BI20070014
(43) Date of publication of application: 11.08.2010
(73) Proprietor: Thermoplay S.p.A., 11026 Pont Saint Martin (Aosta) (IT)
(72) Inventor: ENRIETTI, Piero, I-11020 Donnas (AO) (IT)
(86) International application number: PCT/IT2008/000657
(87) International publication number: WO 2009/054018

(56) References cited:
- WO-A-01/38067
- WO-A-2006/000541
- WO-A-2007/052868
- DE-A1- 4 320 584
- JP-A- 4 085 015
- JP-A- 6 008 295
- US-A- 5 334 010

## Description

### Technical field of the invention

This invention relates in general to the sector of injection moulding of plastic materials, and more closely it concerns a distribution plate, for a mould for the injection moulding of plastics, which includes significant improvements with respect to those ones currently used in the industry, particularly in terms of the capacity of sealing against leakage or outflow of fluid plastic material under pressure which is fed and distributed by the distribution plate in order to be injected into the mould.

This invention also relates to a corresponding improved process for assembling a distribution plate for the injection moulding of plastic materials, and a mould that includes an improved distribution plate such as the one proposed herein.

### Background art

Distribution plates generally have the function, in a machine for the injection moulding of plastic material, of receiving a fluid plastic material under pressure and of distributing it to one or many injection nozzles, which are in turn intended for directly injecting the plastic material into the inner cavities of the mould.

Such a distribution plate may be made of a plurality of distinct distribution elements or modules, which are integrated in the structure of the mould and are traversed internally by a plurality of flow channels, or hot channels, along which the plastic material flows towards the injection nozzles.

These flow channels may extend from one Distribution element to the next, or may traverse several adjacent distribution elements, and together make up a network of flow channels for distribution of the fluid plastic material to the injection nozzles.

A distribution plate exhibiting the general characteristics set out above is described in the international patent application PCT/EP2005/052821, published as WO2006/000541 A1 1 and having the same holder as that of the present application, such previous patent application being quoted here both as a document reflecting the known art and as a useful reference for any further information and/or clarification not found in the present one.

One typical problem regarding the manufacturing of these distribution plates concerns the connections between the different flow channels or sections of flow channels which are formed, each continuing on from the other, in the distinct distribution elements of the distribution plate and in particular the requirement that these connections or junctions must be such as to allow the distribution elements, and in general the different parts that make up the distribution plate, to thermally freely expand with respect to one another and hence not cause dangerous stresses to arise in the distribution plate during use.

In this regard, the above-mentioned application PCT/EP2005/052621 proposes a distribution plate, for distributing the plastic material to a plurality of injection nozzles, comprising a plurality of plate elements, separate from one another, which internally define multiple channels for the flow of the fluid plastic material, in which a plurality of expansion joints is provided both for connecting one with another the sections of the flow channels which are formed in two adjacent plate elements, and for connecting the flow channels with the injection nozzles, in such a way as to permit relative expansion movements, in the event of temperature changes, among the different parts of the distribution plate.

The expansion joints described in this patent application, though allowing the single plate elements or distribution elements to expand freely without giving rise to dangerous stresses, appear conditioned however, at least in terms of their capability to ensure sealing against the outflow or leakage to the outside of the fluid plastic material that flows through them and in the respective flow channels, by the arrangements, characteristics and precision with which the various plate elements making the distribution plate are mounted.

In particular, it has been shown experimentally how an imprecise construction of the various distribution elements and/or how a lack of accuracy when they are mounted during assembly of the distribution plate on the mould can give rise to stresses and deformations likely in certain circumstances to compromise, or at least significantly limit, the capability of the junctions made with these expansion joints to seal against leakage of the molten plastic material that flows through them, in particular at the high pressure values; sometimes greater than 1400 bar, such as those present in the most modern injection moulding art.

In particular it is supposed that the occurrence of these leaks may in some way depend, possibly also by direct or indirect effect of the stresses and deformations mentioned above, on an incorrect and insufficiently precise alignment of the seats, formed in the two adjacent plate elements, in which the ends of the expansion joints are accommodated and mounted, or also by other, often concomitant causes, which are not always easy to identify.

To sum up, the solution described in the above-mentioned patent application filed on behalf of the applicant appears in need of further improvements and enhancements in order to guarantee absolute and sure sealing against any leakage to the outside of the fluid plastic material flowing in the junction zones of the flow channels which extend through two distinct, contiguous and adjacent distribution elements.

It is also known from patent document WO 2007/052668 A1 an extension manifold, for the moulding of plastics or resin, extended by connecting a first manifold with a second manifold, wherein a bush, for the flow of the plastic material, is inserted at the ends into the two manifolds, and a dish spring is inserted in a space defined between a stair formed in an enlarged hole of one of the manifolds and a protruded ring formed on the external surface of the bush, for controlling the thermal expansion occurring between the ends of the bush and the two manifolds.

However even this known extension manifold is not totally exempts from the drawbacks before outlined, so as to request further improvements relating to the sealing of the connection zone between the two adjacent manifolds, in order to avoid any leakage.to the outside of the plastic material flowing from one to the other of them.

### Disclosure of invention

Therefore one object that this invention intends to achieve is that of overcoming the drawbacks set out above, by proposing a distribution plate for a mould for the injection moulding of plastic materials and of the type including several distribution elements defining a network of flow channels, which possesses improved characteristics and performances, and in particular is such as to allow the respective distribution elements to expand freely one with respect to the other, for the purposes of avoiding dangerous stresses being generated in the structure of the distribution plate, and to ensure at the same time perfect sealing against any leakage of the molten plastic material in the connection zones between the flow channels formed in the various distribution elements.

The above object may be considered to be fully achieved by the distribution plate and the process for assembling a distribution plate in accordance with independent claims 1 and 11.

Particular embodiments of the invention are defined in the dependent claims.

As will be better understood in the following description, the distribution plate proposed here has numerous advantages, such as that of guaranteeing, with simple arrangements and at low cost, perfect and sure sealing against any leakage of the plastic material distributed by it.

Accordingly with this innovative distribution plate there is no longer the need to have to provide, for the parts comprising it, an extremely accurate and precise assembly, which other than being expensive is never completely sure of guaranteeing the desired sealing results, as unfortunately is the case of the conventional distribution plates.

### Brief description of drawings

These and other objects, characteristics and advantages of this invention will appear clearly from the following description of a preferred embodiment thereof, provided solely by way of a non-limiting example with reference to the accompanying drawings, where:
Fig. 1 is a plan view of a distribution plate, according to this invention, for a mould for the injection moulding of plastic materials;
Fig. 2 is a section view, along the line II-II of Fig. 1, that shows a distribution network comprised by hot flow channels made in the distribution plate of the invention;
Fig. 3 is a view, in an enlarged scale, of a connection zone between the hot flow channels of Fig. 2;
Fig. 4 is a view of some details of the connection zone of Fig. 3 under operating conditions, i.e. with the distribution plate hot; and
Figs. 5 and 6 are respectively a front view and a section view, along the line VI-VI of

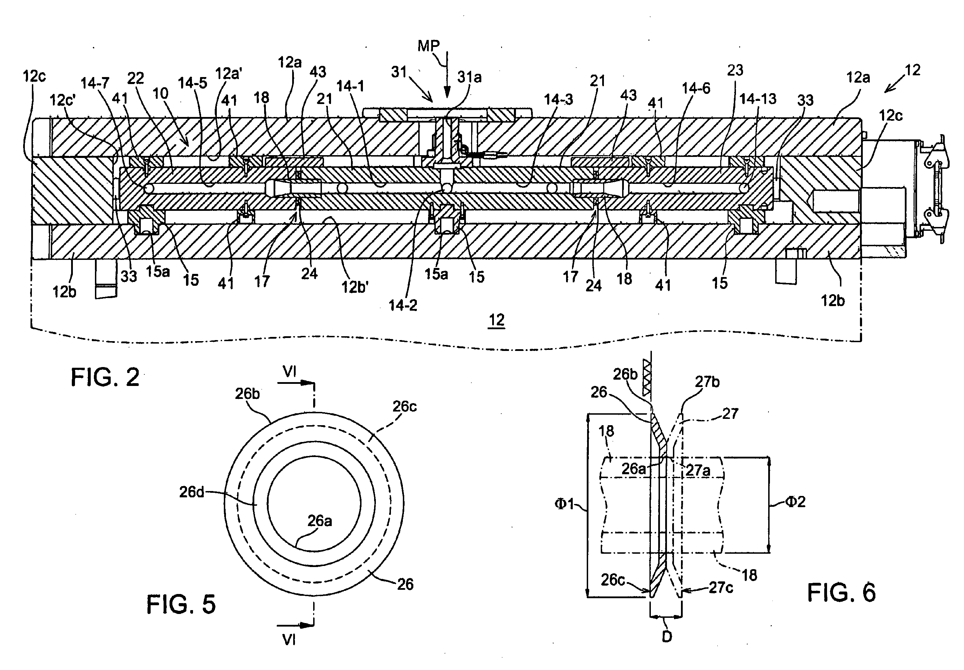

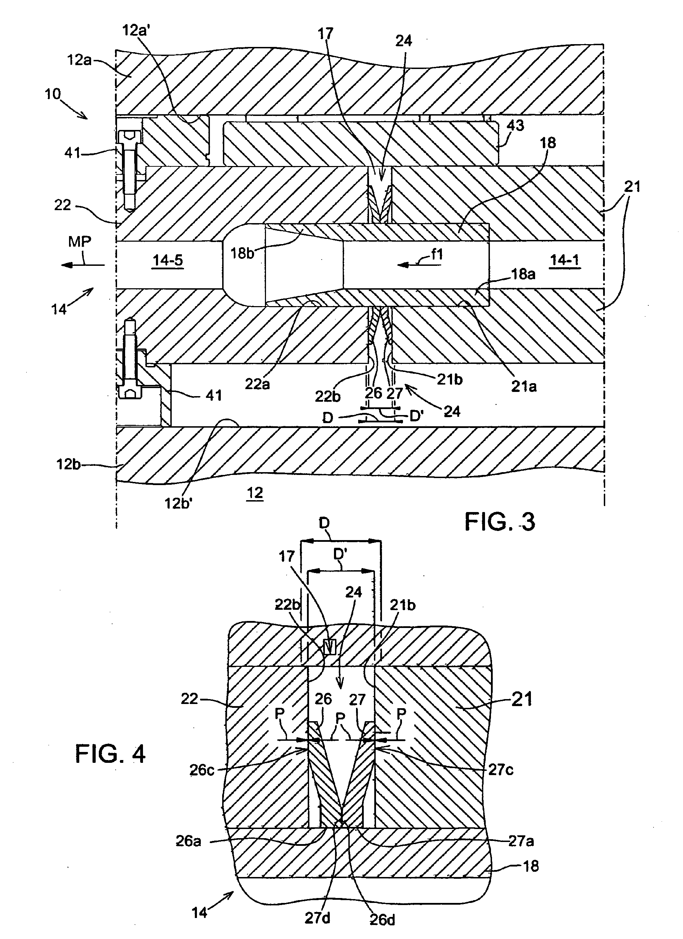

Fig. 5, of a sealing element, in the form of a Belleville spring, mounted in the connection zone of Fig. 3.

### Best mode for carrying out the invention

With reference to the drawings, a distribution plate, also called "hot plate", having the characteristics of the present invention and intended for use in the field of moulding of plastic materials, is generically indicated with the numeral 10.

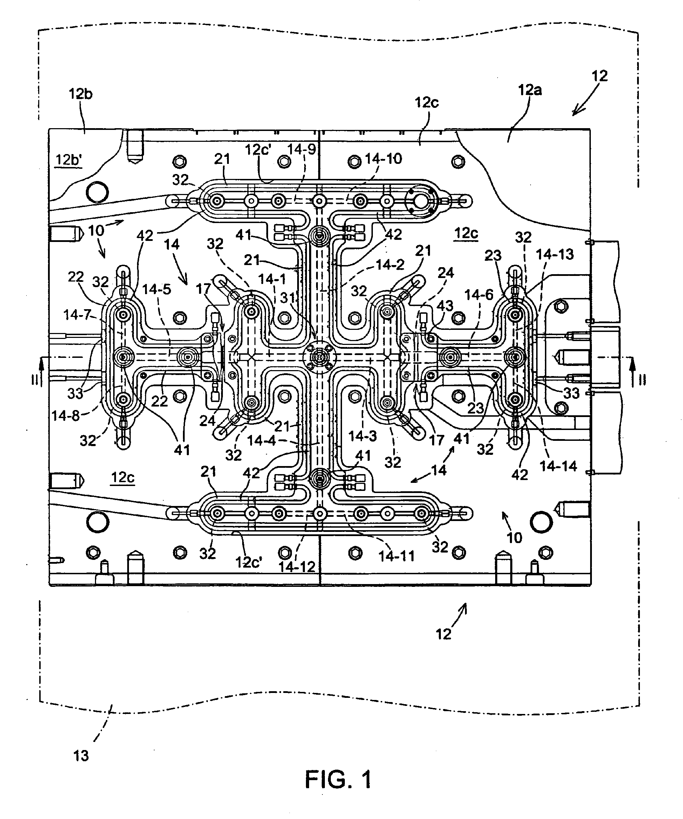

Such a distribution plate 10 is typically provided for feeding and distributing a plastic material in the fluid or molten state to a mould 12, in turn fitted and used in a machine 13, shown schematically only in dot and dash lines in Fig. 1, for the injection moulding of plastic materials.

The distribution plate 10 is integrated with the block that constitutes the mould 12, and in particular it is arranged between an outer plate 12a, also called end plate, and an inner plate 12b, also called nozzle-bearing plate, in which the end plate 12a defines an outer end or wall of the block comprising the mould 12, and the nozzle-bearing plate 12b supports and accommodates one or more injection nozzles having the function of directly injecting into mould 12 the plastic material distributed and received from the distribution plate 10.

An intermediate plate 12c, part of the mould block 12 and placed between the plates 12a and 12b, runs with an internal profile 12c' around the distribution plate 10, so as to form a kind of frame that accommodates the distribution plate 10.

The distribution plate 10 is essentially made of a plurality of distinct distribution or distributing elements which are arranged adjacently and beside one another, between the two plates 12a and 12b, and also comprises a plurality of flow channels, usually called "hot channels" or "hot flow channels" which are formed internally and extend, through the various distribution elements, in continuation of one another, in particular according to a branch-like configuration so as to define a distribution network 14.

These flow channels have the specific function of distributing the fluid plastic material from a feeding or entrance zone of the distribution plate 10 to the injection nozzles, housed in plate 12b, so that it is injected into the mould 12, as said above.

The distribution elements comprising the distribution plate 10 have a flat or plate-like shape, in the direction of their extension along the two plates 12a and 12b of the mould block 12, and have, in plan, i.e. when observed in the normal direction to the plane of plate 12a or 12b, a profile that may variously shaped.

In general both the number of these distribution elements and the plan configuration of their profile depends on the characteristics of the mould 12, and more in particular on the number and arrangement of the zones of mould 12 that the distribution network 14, formed therein, must reach for distributing and injecting therein the fluid plastic material.

For example, in the non-limiting embodiment as illustrated in the drawings, the distribution plate 10 consists of three single distribution elements indicated with numerals 21, 22 and 23, wherein the distribution element 21 is arranged in a central zone and has a branch-like configuration reminiscent of a cross, and the other two distribution elements 22 and 23, both of which have a 'T' configuration, are arranged laterally and at opposite sides with respect to the distribution element 21.

The distribution elements 21, 22, 23 are arranged and configured in the distribution plate 10 in such a way as not to be in direct contact with one another, but instead leaving an empty space or gap between two adjacently arranged elements, thus enabling distribution elements 21, 22, 23 to have free and unimpeded thermal expansions, as will be explained better below.

In particular, the distribution elements 21, 22, 23 are separated from one another by a separating space or cut 17, defining a distance D (Figs. 3 and 4), in correspondence with respective adjacent portions that are traversed by two flow channels, one continuing on from the other, i.e. by two contiguous sections of one flow channel.

Each of the distribution elements 21, 22, 23 is mounted and exactly positioned and matched, i.e. centered, with respect to the mould block 12 through a respective centering pin or member 15, protruding from the distribution element itself and accommodated in a corresponding seat 15a produced on the nozzle-bearing plate 12b of the mould 12.

Furthermore spacing elements 41, rigidly mounted on the distribution elements 21, 22, 23 but suitable for sliding along the surfaces 12a' and 12b' of the plates 12a and 12b of mould 12, have the function of holding and supporting at a given distance or space the distribution elements 21, 22, 23 between the plates 12a and 12b, at the same time leaving them free to expand longitudinally with respect to these plates.

Therefore the distribution elements 21, 22, 23, thanks to this centered and supported assembly with respect to the mould block 12, together with the fact that, though adjacent, they are separated by a certain distance from one another, can expand freely, i.e. they can have limited movements relative to one another and with respect to the plates 12a and 12b when distribution plate 10 is subjected, during operation, to high temperature variations, without these thermal expansions triggering dangerous tensions in the structure of distribution plate 10.

Again, suitable contrasting members 33, placed between the intermediate plate 12c of the mould block 12 and the distribution elements 22 and 23, may be provided for receiving and contrasting at least a part of the stresses acting on the latter-named when distribution plate 10 is in operation, and in particular for reducing the extent of the stresses acting on the centering pins 15.

In any event, these contrasting members 33 are not to be considered essential and can therefore not be present, in which case the centering pins 15 associated with the distribution elements 21, 22 and 23 are suitably sized in order to receive and contrast alone all the stresses that arise between the distribution elements 21, 22 and 23 during operation of the distribution plate 10.

As already anticipated, distribution plate 10 is provided for receiving and being fed with molten plastic material, indicated MP, from other parts of the moulding machine 13.

In particular the fluid plastic material MP is received by the distribution plate 10 through an aperture 31 a, provided in a feeding zone 31 and communicating with the interior of the central distribution element 21, for being distributed from this feeding zone, along the flow channels of the distribution network 14 made in the three distribution elements 21, 22 and 23, to a plurality of injection nozzles 32, housed in the plate 12b of the mould 12, from where the molten plastic material MP is then directly injected into mould 12.

In the non-limiting embodiment illustrated here, the distribution network 14 comprises four flow channels or flow channel sections, 14-1, 14-2, 14-3, and 14-4, made internally in the central distribution element 21, which branch out in a cross-like form from a common origin in the feeding zone 31.

This distribution network 14 also has two flow channels 14-5 and 14-6 which are made in the distribution elements 22 and 23 in continuation of and therefore in the same direction respectively as the flow channels 14-1 and 14-3 (Fig. 1), to receive from the latter the fluid plastic material MP.

There are further channels or flow channel sections 14-7, 14-8,.... 14-14, and still others, not indicated here for simplicity's sake, that are made in the distribution elements 21, 22 and 23, and which continue from or branch out perpendicular to those mentioned above so as to complete the distribution network 14 on the periphery, in order to convey the plastic material received from the distribution plate 10 to the various injection nozzles 32.

Suitable connecting or connection elements, indicated with numeral 18 and also called expansion joints, are provided for connecting the flow channels which extend, in continuation of one another, through two adjacent distribution elements, in order to establish continuity along the distribution network 14, despite the separating spaces 17 between the distribution elements 21, 22, 23 in the connection zones of the flow channels.

These connection elements 18 are substantially conforming to those described in patent application PCT/EP2005/052821, already quoted above, having the same applicant as the present one.

In particular, each of these connection elements is made, as shown in Fig. 3 with reference to the specific connection element that connects the flow channels 14-1 and 14-5 formed respectively in the distribution elements 21 and 22, of a tubular coupling 18, which is accommodated and permanently fixed at a first end 18a, for instance in a planting operation, in a corresponding seat 21 a formed in the distribution element 21, and is slidingly accommodated at a second end 18b, opposite the first, in a corresponding seat 22a formed in the Distribution element 22.

Thanks therefore to this mounting configuration, the tubular coupling 18 is suitable for sliding along the respective axis, that is to say for having, local to the end 18b, limited relative movements with respect to the adjacent distribution elements 21 and 22, when, due to the effect of the thermal expansions produced by the temperature variations, the distance D, defined by the cut 17 between the two adjacent distribution elements 21 and 22, tends to vary over time.

The injection nozzles 32 that receive the fluid plastic material distributed by the distribution plate 10 for directly injecting into mould 12 can be made and coupled with mould 12 according to various arrangements, and can also be of various operating types, substantially non-influential and irrelevant for the purposes of this invention.

Other parts are provided to complete the construction of the distribution plate 10 and the relative mounting on the mould 12, between the plates 12a and 12b, while ensuring its complete operating functionality, such as for instance electrical heating resistances, indicated with numeral 42, which are arranged in a coil configuration adjacently to the various flow channels 14-1, 14-2, 14-3, etc. of the distribution network 14, in order to heat and keep them constantly at the required temperature.

Again distribution plate 10 may include, among its parts, a number of reference elements 43, also called transport guides, which have the purpose simply of keeping the distribution elements 21, 22, 23 assembled during transport, and thus of facilitating their mounting and final positioning and matching on the mould 12.

It should however be pointed out that these reference elements 43, where provided, leave the distribution elements 21, 22 and 23 full freedom to expand, once assembled on mould 12, in response to the heat variations they are subject to in operation.

According to an essential characteristic of this invention, distribution plate 10 also comprises, in correspondence with each of the zones joining or connecting the hot flow channels between two adjacent distribution elements, sealing means, generically indicated with numeral 24, which are associated with the connection element 18 to ensure under all conditions perfect and sure sealing against any outflow to the outside of plastic material MP flowing through the flow channel joining zone.

In particular the sealing means 24 are suitable for producing a hermetical seal around the connection element 18, in the area of the separating space 17 between the two adjacent distribution elements, by cooperating in a pressure relationship with the portions of the two adjacent distribution elements, facing the separating space 17, when the distribution plate 10 expands on account of the heating it is subject to during operation.

In construction terms, as represented in detail in Fig. 3, these sealing means 24 are composed of at least one pair of Belleville springs, respectively 26, 27, truncated cone shape, also commonly called using expressions that have come into technical jargon "Bauer sprigs" and "Belleville spring washers", wherein these Belleville springs 26, 27 are mounted, one beside the other, on the external cylindrical surface of the tubular coupling 18 and are then accommodated in the separating space or cut 17, defined by the distance D, that separates the two adjacent distribution elements 21 and 22 in the joining zone between the channels 14-1 and 14-5.

As illustrated in Figs. 5 and 6, these Belleville springs 26, 27 each define a central circular hole, respectively 26a, 27a, an external circular profile or edge, respectively 26b, 27b, and adjacently to the latter a ring-shaped pressure plane, indicated respectively with 26c, 27c, produced in a grinding or lapping operation.

In the assembly configuration such as represented in Figs. 3 and 4, the two Belleville springs 26 and 27 are arranged and accommodated in the space 17 that separates the two distribution elements 21 and 22, whereby the respective central holes 26a, 27a axially receive the tubular coupling 18.

Moreover the ring-shaped pressure planes 26c, 27c provided in the Belleville springs 26 and 27 are arranged in contact with the facing surfaces, respectively 22b e 21 b, of the adjacent distribution elements 22 and 21, and the internal edges, adjacent to the holes 26a, 27a of the same springs 26 and 27, are arranged in contact with one another, along respective ring-shaped surfaces 26d, 27d.

To facilitate mounting of the distribution plate 10 on the mould 12, these Belleville springs 26, 27 are sized so that they can be accommodated essentially free and unimpeded in the space 17, though with a slight clearance, of for instance 0.1 ÷ 0.2 mm, with respect to the walls 21 b and 22b of the distribution elements 21 and 22, in cold conditions, i.e. when the distribution plate 10 is not yet hot as under operating conditions.

To advantage Belleville springs 26 and 27 may be produced in determined normalized dimensions, so as to be suitable for meeting the usual requirements, shapes and dimensions in the field of distribution plates and their assembly and integration in the moulds currently employed in injection moulding.

In particular, with reference to Fig. 6, the Belleville springs used in assembling a distribution plate according to this invention may be of two distinct normalized types, having the dimensions defined in the following table, where:
∅1 is the outer diameter of the Belleville spring,
∅2 is the diameter of the central hole of the Belleville spring;
D is the thickness or height at rest, i.e. in non-deformed configuration, of the pack formed by two Belleville springs (therefore D corresponds substantially, and is therefore indicated with the same symbol as it, to the distance that defines under cold conditions the separating space 17 between two adjacent distribution elements in which the two Belleville springs are accommodated)

| Normalized Belleville spring | ∅1 [mm] | ∅2 [mm] | D [mm] |
|---|---|---|---|
| 1 st TYPE | 50 | 26 | 7.3 |
| 2nd TYPE | 60 | 32 | 8.7 |

In operation, a distribution plate 10 according to this invention is fed with the molten plastic material MP, which then flows at high temperatures, generally above 200 °C, and pressures, even higher than 1400 bar, through the hot flow channels 14-1, 14-2, 14-3, etc. of the distribution network 14, as indicated by arrow f1 in Fig. 3

This produces heating of the distribution plate 10, so that its parts, in particular the distribution elements 21, 22, 23, expand, causing a contraction from D to D', as indicated in Figs. 3 and 4, of the distance separating them in the flow channel connection zones.

Because of this contraction, Belleville springs 26, 27 are compressed and elastically deformed in the axial direction, whereby they react accordingly by exerting, through the respective ring-shaped planes 26c e 27c, a corresponding pressure P against the walls 21b and 22b of the distribution elements 21 and 22, as indicated in Fig. 4, so as to hermetically seal the space around the tubular coupling 18 and thus guarantee sealing against any leakage to the outside of the molten plastic material MP flowing through the zone of the tubular coupling 18.

In other words, when distribution plate 10 is hot, Belleville springs 26 and 27 exert both in the area of contact between one another and also, through the peripheral ring-shaped pressure planes 26c and 27c, against the facing walls 21b and 22b of the two adjacent distribution elements 21 and 22, a pressure P of an entity suitable to prevent in all operating situations the material MP, flowing in the joining zone, from leaking to the outside, in particular also in the event of a non-perfect sealing, caused for instance by defective and imprecise mounting, between the tubular coupling 18 and the adjacent distribution elements 21, 22.

In this regard, it should be noted how the two Belleville springs 26 and 27 operate in such a way as to produce, when the distribution plate 10 is in operation, a positive and automatic compensation effect for providing the above sealing around the tubular coupling 18.

In fact, when the temperature of the distribution plate 10 tends to increase, particularly in presence of more critical operating conditions, such as an increase in the temperature of the fluid plastic material MP flowing in it, and consequently the distance D in the zone of the cut 17 tends to decrease on account of the higher thermal expansions of the distribution elements 21 and 22, the pressure P exerted by the Belleville springs 26 and 27 against the respective walls 21b e 22b also tends to increase correspondingly, due to the further elastic deformations in the axial direction of the same Belleville springs 26 and 27.

Therefore; as a result, the Belleville springs 26 and 27 react to compensate with a more efficacious sealing action for these more critical conditions, thereby always and in all operating situations guaranteeing sealing of the plastic material, that is preventing it from leaking to the outside in the flow channel joining zones.

In particular the forces which, during operation and heating of the distribution plate 10, are inducted on the distribution elements 21, 22 and 23 by the pressure exerted by Belleville springs 26 and 27 are received and supported by the centering pins 15, by means of which the distribution elements 21, 22 and 23 are centered with respect to the mould 12, in such a way as to allow Belleville springs 26 and 27 to fully exert their sealing action against the outflow of fluid plastic material in the flow channel joining zones.

From the description provided, it will therefore be clear that this invention fully achieves the objects that it was intended to achieve.

Naturally, without prejudice to the basic principle and concepts of this invention, the embodiments and manufacturing details of the distribution plate proposed here may be abundantly varied with respect to what has been described and illustrated thus far, without departing from the scope of the invention as defined by the appended claims.

For instance the Belleville springs mounted in the separating space between two adjacent distribution elements may be more than two, or they could be mounted overlapping one another along the respective conical surfaces.

Still the Belleville springs could be mounted in this separating space in the direction opposite that described in the foregoing, i.e. in such a way as to press with their respective inner edges against the facing walls of the two adjacent distribution elements, instead of with their outer edges and respective ring-shaped bearing planes.

## Claims

1. A distribution plate (10) for a mould (12) for the injection moulding of plastic materials, comprising:
- a plurality of distribution elements or modules (21, 22, 23), separate from one another, defining internally a distribution network (14) made of a plurality of hot flow channels (14-1, 14-2, 14-3, etc.) suitable for distributing a plastic material (MP), in the molten state, to one or more injection nozzles (32) in order to be injected into said mould (12); and
- one or more tubular connection elements (18, 18a, 18b) each provided for connecting the flow channel sections (14-1, 14-5) formed in two adjacent distribution elements (21, 22, 23),
wherein, in the zone of each of said tubular connection elements (18), the two adjacent distribution elements (21-22, 21-23) are separated from one another by a separating space (17, D, D'),
wherein each of said tubular connection elements (18) is mounted at the ends (18a, 18b) in respective seats (21a, 22a) made in the two adjacent distribution elements (21-22, 21-23), with at least one (18b) of said ends being slidingly coupled with the seat (22a) of one (22) of said two adjacent distribution elements (22, 23), in order to permit the thermal expansions between the two adjacent distribution elements (21-22, 21-23) induced by the temperature changes acting in the distribution plate (10), **characterised in that**
said distribution plate (10) further comprises elastic sealing means (24), in the form of at least two Belleville springs (26, 27), that are mounted, around each tubular connection element (18), in said separating space (17, D, D') defined between said two adjacent distribution elements (21, 22), and are suitable for elastically cooperating, by exerting a pressure (P), with the portions (21b, 22b), facing said separating space (17, D'), of said two adjacent distribution elements (21, 22), when said distribution plate (10) is subject to thermal expansion during operation,
whereby said at least two Belleville springs (26, 27) produce a hermetic seal around each of said tubular connection elements (18), in said separating space (17, D'), and thus ensure sealing of both the coupling zones of the ends (18a, 18b) of each tubular connection element (18) with the respective seats (21a, 22a) made in the two adjacent distribution elements (21, 22), against any outflow or leakage to the outside of the plastic material (MP) that flows (f1) in said tubular connection element (18), and
wherein said distribution plate (10) is configured in such a way that, when it is in a cold condition, that is not warmed up, said at least two Belleville springs (26, 27) are accommodated substantially free and unimpeded, that is not forced and with a certain clearance, in said separating space (17, D),
whereby said at least two Belleville springs are suitable for exerting said pressure (P) on said portions (21b, 22b), facing said separating space (17, D'), of the two adjacent distribution elements (21, 22), and thereby ensuring said sealing, only when said distribution plate (10) is warmed up and hence is subject to thermal expansion during operation.

2. Distribution plate according to claim 1, wherein said at least two Belleville springs (26, 27) are housed in said separating space (17) with the respective outer edges (26b, 26c, 27b, 27c) which press against the facing sides (21b, 22b), defining said separating space (17), of the two adjacent distribution elements (21, 22), and with the respective inner edges (26d, 27d), arranged around the tubular connection element (18), in reciprocal contact one against the other.

3. Distribution plate according to claim 2, wherein said two Belleville springs (26, 27) each define, adjacently to the outer edge (26b, 27b), a respective ring-shaped pressure plane (26c, 27c), produced with a grinding or lapping operation, through which plane said two Belleville springs (26, 27) exert said pressure (P) against the facing sides (21b, 22b) of the two adjacent distribution elements (21, 22).

4. Distribution plate (10) according to one of the previous claims, wherein each of said distribution elements (21, 22, 23) is associated with centering means (15, 15a) that are designed for centering and matching the distribution element with respect to the structure of said mould (12), while leaving it at the same time free to expand relatively to the other distribution elements.

5. Distribution plate (10) according to claim 4, wherein said centering means comprise at least one centering element (15), in the form of a centering pin, integral with and protruding from the distribution element (21, 22, 23), wherein said centering pin (15) is accommodated in a corresponding seat (15a) made in said mould (12).

6. Distribution plate (10) according to one of the previous claims, wherein said distribution elements (21, 22, 23) extend plate-like between an end plate (12a) and a nozzle-bearing plate (12b) of said mould (12).

7. Distribution plate (10) according to one of the previous claims, wherein said at least two Belleville springs (26, 27) have each an outer diameter (∅1) between 30 and 100 mm, and an internal hole (26a; 27a) of diameter (∅2) between 20 and 80 mm.

8. Distribution plate (10) according to claim 7, wherein said at least two Belleville springs (26, 27), arranged one beside the other in said separating space (17, D, D'), are identical and define a pack having a width, when the two Belleville springs (26, 27) are in a non-deformed configuration, .equal to 7.3 mm or 8.7 mm, with the outer diameter (∅1) of said Belleville springs equal respectively to 50 mm or 60 mm.

9. Mould for the moulding of plastic materials, incorporating a distribution plate according to any one of the claims from 1 to 8.

10. Process for assembling, on a mould (12) for the injection moulding of plastic materials, a distribution plate (10) of the type comprising:
- a plurality of distribution elements or modules (21, 22, 23), separate from one another, defining internally a distribution network (14) made of a plurality of hot flow channels (14-1, 14-2, 14-3, etc.) suitable for distributing a plastic material (MP), in the molten state, to one or more injection nozzles (32) associated with said mould (12), said distribution elements (21, 22, 23) being adapted to be centered with respect to said mould (12) by means of respective centering pins (15); and
- one or more tubular connection elements (18) each provided for connecting the flow channel sections (14-1, 14-5) made in two adjacent distribution elements (21-22, 21-23) of said distribution plate (10), with at least one end (18b) of each tubular connection element (18) being suitable for slidingly coupling with one (22) of said two adjacent distribution elements (21, 22),
wherein the assembling process comprises the following steps:
- mounting and centering said distribution elements (21, 22, 23) on said mould (12), while jointly connecting them (21, 22, 23) by means of said one or more tubular connection elements (18, 18a, 18b), so that said distribution elements (21, 22, 23), once mounted and centered with respect to said mould (12) by means of said centering pins (15), are reciprocally separated by a separating space (17, D), in the zones of said tubular connection elements (18), and
- housing further elastic sealing means (24), in the form of at least two Belleville springs (26, 27), around each of said one or more tubular connection elements (18), in said separating space (17, D) between the two adjacent distribution elements (21, 22),
wherein said distribution plate is configured in such a way that, when it is assembled on said mould (12) and is in a cold condition, that is not warmed up, said at least two Belleville springs (26, 27) are accommodated substantially free and unimpeded, that is not forced and with a certain clearance, in said separating space (17, D),
whereby, when said distribution plate (10) is subject to heating during operation, the respective distribution elements (21, 22) expand with respect to one another and cause a contraction (D') of said separating space (17) in the zone of each tubular connection element (18), so that said at least two Belleville springs (26, 27), accommodated in said separating space (17), are compressed and cooperates elastically, by exerting a pressure (P), with the portions (21b, 22b), facing said separating space (17, D'), of the two adjacent distribution elements (21, 22), in order to produce a hermetical sealing around each of said one or more tubular connection elements (18), in said separating space (17, D'), and thus ensure sealing of both the coupling zones of the ends (18a, 18b) of each tubular connection element (18) with the two adjacent distribution elements (21, 22), against any outflow or leakage to the outside of the plastic material (MP) flowing (f1) in said tubular connection element (18).

## Patentansprüche

1. Verteilerplatte (10) für ein Formwerkzeug (12) für das Spritzgießen von Kunststoffmaterialien, Folgendes umfassend:
- mehrere Verteilerelemente oder -module (21, 22, 23), die voneinander getrennt sind und im Inneren ein Verteilernetzwerk (14) definieren, das aus mehreren Heißströmungskanälen (14-1, 14-2, 14-3 usw) besteht und geeignet ist, ein Kunststoffmaterial (MP) in geschmolzenem Zustand zu einer oder mehreren Spritzdüsen (32) zu verteilen, um es in das Formwerkzeug (12) einzuspritzen, und
- ein oder mehrere röhrenförmige Verbindungselemente (18, 18a, 18b), von denen jedes dafür bereitgestellt ist, die Strömungskanalabschnitte (14-1, 14-5) zu verbinden, die in zwei aneinander angrenzenden Verteilerelementen (21, 22, 23) gebildet sind,
wobei die zwei aneinander angrenzenden Verteilerelemente (21-22, 21-23) im Bereich jedes der röhrenförmigen Verbindungselemente (18) durch einen Trennraum (17, D, D') voneinander getrennt sind,
wobei jedes der röhrenförmigen Verbindungselemente (18) an den Enden (18a, 18b) in jeweilige Sitze (21a, 22a) montiert ist, die in den zwei aneinander angrenzenden Verteilerelementen (21-22, 21-23) hergestellt sind, wobei mindestens eines (18b) der Enden gleitfähig an den Sitz (22a) von einem (22) der zwei aneinander angrenzenden Verteilerelemente (22, 23) gekoppelt ist, um die thermischen Ausdehnungen zwischen den zwei aneinander angrenzenden Verteilerelementen (21-22, 21-23) zu ermöglichen, die durch die in der Verteilerplatte (10) wirkenden Temperaturänderungen ausgelöst werden, **dadurch gekennzeichnet, dass**
die Verteilerplatte (10) ferner elastische Abdichtungsmittel (24) in Form von mindestens zwei Tellerfedern (26, 27) umfasst, die um jedes röhrenförmige Verbindungselement (18) in den Trennraum (17, D, D') montiert sind, der zwischen den zwei aneinander angrenzenden Verteilerelementen (21, 22) definiert ist, und die geeignet sind, durch Ausüben eines Drucks (P) elastisch mit den dem Trennraum (17, D') zugewandten Abschnitten (21b, 22b) der zwei aneinander angrenzenden Verteilerelemente (21, 22) zusammenzuwirken, wenn die Verteilerplatte (10) während des Betriebes thermischer Ausdehnung unterworfen ist,
wodurch die mindestens zwei Tellerfedern (26, 27) um jedes der röhrenförmigen Verbindungselemente (18) im Trennraum (17, D') eine hermetische Dichtung erzeugen und somit das Abdichten der beiden Kopplungsbereiche der Enden (18a, 18b) jedes röhrenförmigen Verbindungselements (18) mit den jeweiligen Sitzen (21a. 22a), die in den zwei aneinander angrenzenden Verteilerelementen (21, 22) hergestellt sind, gegen Ausströmen oder Aussickern vom Kunststoffmaterial (MP), das in das röhrenförmige Verbindungselement (18) strömt (f1), gewährleisten und
wobei die Verteilerplatte (10) derart gestaltet ist, dass die mindestens zwei Tellerfedern (26, 27) im Trennraum (17, D) im Wesentlichen frei und ungehindert, d. h. nicht gezwungen und mit einem bestimmten Spiel aufgenommen sind, wenn sich die Platte in einem kalten, d. h. nicht aufgewärmten Zustand befindet,
wodurch die mindestens zwei Tellerfedern geeignet sind, den Druck (P) auf dem Trennraum (17, D') zugewandten die Abschnitte (21b, 22b) der zwei aneinander angrenzenden Verteilerelemente (21, 22) nur dann auszuüben, und dadurch das Abdichten zu gewährleisten, wenn die Verteilerplatte (10) aufgewärmt ist und somit während des Betriebes thermischer Ausdehnung unterworfen ist.

2. Verteilerplatte nach Anspruch 1, wobei die mindestens zwei Tellerfedern (26, 27) im Trennraum (17) untergebracht sind, wobei die jeweiligen Außenkanten (26b, 26c, 27b, 27c), die gegen die zugewandten den Trennraum (17) definierenden Seiten (21b, 22b), der zwei aneinander angrenzenden Verteilerelemente (21, 22) drücken, und wobei die jeweiligen Innenkanten (26d, 27d), die um das röhrenförmige Verbindungselement (18) angeordnet sind, in gegenseitigem Kontakt miteinander stehen.

3. Verteilerplatte nach Anspruch 2, wobei die zwei Tellerfedem (26, 27) angrenzend an die Außenkante (26b, 27b) jeweils eine jeweilige ringförmige Druckebene (26c, 27c) definieren, die mit einem Reibungs- oder Läppungsvorgang erzeugt wird und über welche die zwei Tellerfedern (26, 27) den Druck (P) auf die zugewandten Seiten (21b, 22b) der zwei aneinander angrenzenden Verteilerelemente (21, 22) ausüben.

4. Verteilerplatte (10) nach einem der vorhergehenden Ansprüche, wobei jedes der Verteilerelemente (21, 22, 23) mit Zentriermitteln (15, 15a) verbunden ist, die zum Zentrieren und Abstimmen des Verteilerelements im Verhältnis zur Struktur des Formwerkzeugs (12) gestaltet sind, während das Verteilerelement gleichzeitig frei bleibt, um sich im Verhältnis zu den anderen Verteilerelementen ausdehnen zu können.

5. Verteilerplatte (10) nach Anspruch 4, wobei die Zentriermittel mindestens ein Zentrierelement (15) in Form eines Zentrierstiftes umfassen, der einstückig mit dem Verteilerelement (21, 22, 23) gebildet ist und aus diesem hervorsteht, wobei der Zentrierstift (15) in einem entsprechenden Sitz (15a) aufgenommen ist, der im Formwerkzeug (12) hergestellt ist.

6. Verteilerplatte (10) nach einem der vorhergehenden Ansprüche, wobei sich die Verteilerelemente (21, 22, 23) plattenartig zwischen einer Endplatte (12a) und einer Düsen tragenden Platte (12b) des Formwerkzeugs (12) erstrecken.

7. Verteilerplatte (10) nach einem der vorhergehenden Ansprüche, wobei die mindestens zwei Tellerfedern (26, 27) jeweils einen Außendurchmesser (∅1) zwischen 30 und 100 mm und eine innere Öffnung (26a; 27a) mit einem Durchmesser (02) zwischen 20 und 80 mm aufweisen.

8. Verteilerplatte (10) nach Anspruch 7, wobei die mindestens zwei Tellerfedern (26, 27), die im Trennraum (17, D, D') nebeneinander angeordnet sind, identisch sind und einen Packen bilden, der in nicht deformierter Konfiguration der Tellerfedern (26, 27) eine Breite aufweist, die gleich 7,3 mm oder 8,7 mm ist, wobei der Außendurchmesser (∅1) der Tellerfedern jeweils gleich 50 mm oder 60 mm ist.

9. Formwerkzeug zum Gießen von Kunststoffmaterialien, eine Verteilerplatte nach einem der Ansprüche 1 bis 8 beinhaltend.

10. Verfahren zum Zusammensetzen einer Verteilerplatte (10) an einem Formwerkzeug (12) zum Spritzgießen von Kunststoffmaterialien, wobei die Verteilerplatte von der Art ist, die Folgendes umfasst:
- mehrere Verteilerelemente oder "module (21, 22, 23), die voneinander getrennt sind und im Inneren ein Verteilemetzwerk (14) definieren, das aus mehreren Heißströmungskanälen (14-1, 14-2, 14-3 usw.) besteht und geeignet ist, ein Kunststoffmaterial (MP) in geschmolzenem Zustand zu einer oder mehreren Spritzdüsen (32) zu verteilen, die mit dem Formwerkzeug (12) verbunden sind, wobei die Verteilerelemente (21, 22, 23) dafür eingerichtet sind, mit Hilfe von jeweiligen Zentrierstiften (15) im Verhältnis zum Formwerkzeug (12) zentriert zu werden, und
- ein oder mehrere röhrenförmige Verbindungselemente (18), von denen jedes dafür bereitgestellt ist, die Strömungskanalabschnitte (14-1, 14-5) zu verbinden, die in zwei aneinander angrenzenden Verteilerelementen (21-22, 22-23) der Verteilerplatte (10) hergestellt sind, wobei mindestens ein Ende (18b) jedes röhrenförmigen Verbindungselements (18) geeignet ist, gleitfähig mit einem (22) der zwei aneinander angrenzenden Verteilerelemente (21, 22) gekoppelt zu werden,
wobei das Zusammensetzungsverfahren die folgenden Schritte umfasst:
- Montieren und Zentrieren der Verteilerelemente (21, 22, 23) an dem Formwerkzeug (12), wobei sie (21, 22, 23) mit Hilfe des einen oder der mehreren röhrenförmigen Verbindungselemente (18, 18a, 18b) derart gemeinsam verbunden werden, dass die Verteilerelemente (21, 22, 23), sobald sie mit Hilfe der Zentrierstifte (15) im Verhältnis zum Formwerkzeug (12) montiert und zentriert sind, in den Bereichen der röhrenförmigen Verbindungselemente (18) durch einen Trennraum (17, D) voneinander getrennt sind, und
- Unterbringen weiterer elastischer Abdichtungsmittel (24) in Form von mindestens zwei Tellerfedern (26, 27) um das eine oder jedes der mehreren röhrenförmigen Verbindungselemente (18) im Trennraum (17, D) zwischen den zwei aneinander angrenzenden Verteilerelementen (21, 22),
wobei die Verteilerplatte derart gestaltet ist, dass die mindestens zwei Tellerfedern (26, 27) im Trennraum (17, D) im Wesentlichen frei und ungehindert, d. h. nicht gezwungen und mit einem bestimmten Spiel aufgenommen sind, wenn die Platte am Formwerkzeug (12) zusammengesetzt ist und sich in einem kalten, d. h. nicht aufgewärmten Zustand befindet,
wodurch sich die jeweiligen Verteilerelemente (21, 22) im Verhältnis zueinander ausdehnen und im Bereich jedes röhrenförmigen Verbindungselements (18) eine Kontraktion (D') des Trennraumes (17) verursachen, wenn die Verteilerplatte (10) während des Betriebes einer Erhitzung unterworfen ist, so dass die mindestens zwei Tellerfedern (26, 27), die im Trennraum (17) aufgenommen sind, komprimiert werden und durch Ausüben eines Drucks (P) elastisch mit den dem Trennraum (17, D') zugewandten Abschnitten (21b, 22b) der zwei aneinander angrenzenden Verteilerelemente (21, 22) zusammenwirken, um das eine oder jedes der mehreren röhrenförmigen Verbindungselemente (18) im Trennraum (17, D') eine hermetische Abdichtung zu erzeugen und somit das Abdichten beider Kopplungsbereiche der Enden (18a, 18b) jedes röhrenförmigen Verbindungselements (18) mit den zwei aneinander angrenzenden Verteilerelementen (21, 22) gegen Ausströmen oder Aussickern des Kunststoffmaterials (MP), das im röhrenförmigen Verbindungselement (18) strömt (f1), zu gewährleisten.

## Revendications

1. Plaque de distribution (10) pour un moule (12) pour le moulage par injection de matières plastiques, comprenant:
- une pluralité d'éléments ou de modules de distribution (21, 22, 23), séparés l'un de l'autre, définissant intérieurement un réseau de distribution (14) constitué d'une pluralité de canaux d'écoulement chaud (14-1, 14-2, 14-3, etc.) convenant à la distribution d'une matière plastique (MP), à l'état fondu, dans une ou plusieurs tuyères d'injection (32) afin de l'injecter dans ledit moule (12) ; et
- un ou plusieurs éléments de raccordement tubulaires (18, 18a, 18b) chacun aménagé pour raccorder les sections de canal d'écoulement (14-1, 14-5) formées dans deux éléments de distribution adjacents (21, 22, 23),
dans laquelle, dans la zone de chacun desdits éléments de raccordement tubulaires (18), les deux éléments de distribution adjacents (21-22, 21-23) sont séparés l'un de l'autre par un espace de séparation (17, D, D'),
dans laquelle chacun desdits éléments de raccordement tubulaires (18) est monté aux extrémités (18a, 18b) dans des sièges respectifs (21a, 22a) aménagés dans les deux éléments de distribution adjacents (21-22, 21-23), au moins l'une (18b) desdites extrémités étant couplée à coulissement au siège (22a) de l'un (22) desdits deux éléments de distribution adjacents (22, 23) afin de permettre les dilatations thermiques entre les deux éléments de distribution adjacents (21-22, 21-23) induites par les changements de température agissant dans la plaque de distribution (10), **caractérisée en ce que**
ladite plaque de distribution (10) comprend en outre des moyens d'étanchéité élastiques (24) sous la forme d'au moins deux ressorts Belleville (26, 27) qui sont montés, autour de chaque élément de raccordement tubulaire (18), dans ledit espace de séparation (17, D, D') défini entre lesdits deux éléments de distribution adjacents (21, 22) et conviennent pour coopérer de manière élastique, en exerçant une pression (P), avec les portions (21b, 22b), en regard dudit espace de séparation (17, D, D'), desdits deux éléments de distribution adjacents (21, 22) lorsque ladite plaque de distribution (10) est soumise à une dilatation thermique en cours de fonctionnement,
moyennant quoi lesdits au moins deux ressorts Belleville (24, 26, 27) produisent un joint d'étanchéité hermétique, autour de chacun desdits éléments de raccordement tubulaires (18), dans ledit espace de séparation (17, D'), et garantissent donc une étanchéité des deux zones de couplage des extrémités (18a, 18b) de chaque élément de raccordement tubulaire (18) avec les sièges respectifs (21a, 22a) aménagés dans les deux éléments de distribution adjacents (21, 22), à l'encontre de toute décharge ou fuite vers l'extérieur de la matière plastique (MP) qui s'écoule (f1) dans ledit élément de raccordement tubulaire (18), et
dans laquelle ladite plaque de distribution (10) est configurée de manière que, lorsqu'elle se trouve à l'état froid, c'est-à-dire non chauffée, lesdits au moins deux ressorts Belleville (26, 27) soient reçus sensiblement libres et sans contrainte, c'est-à-dire non refoulés et avec un certain jeu dans ledit espace de séparation (17, D), moyennant quoi lesdits au moins deux ressorts Belleville conviennent pour exercer ladite pression (P) sur lesdites portions (21b, 22b), en regard dudit espace de séparation (17, D'), des deux éléments de distribution adjacents (21, 22) en garantissant de la sorte ladite étanchéité uniquement lorsque ladite plaque de distribution (10) est chauffée et est, par suite, soumise à une dilatation thermique en cours de fonctionnement.

2. Plaque de distribution (10) selon la revendication 1, dans laquelle lesdits au moins deux ressorts Belleville (26, 27) sont logés dans ledit espace de séparation (17) avec les bords externes respectifs (26b, 26c, 27b, 27c) qui pressent contre les faces en regard (21b, 22b, définissant ledit espace de séparation (17), des deux éléments de distribution adjacents (21, 22) et avec les bords internes respectifs (26d, 27d), aménagés autour de l'élément de raccordement tubulaire (18), en contact mutuel l'un contre l'autre.

3. Plaque de distribution selon la revendication 2, dans laquelle lesdits deux ressorts Belleville (26, 27) définissent chacun, de manière adjacente au bord externe (26b, 27b), un plan de pression annulaire respectif (26c, 27c), produit par une opération de meulage ou de rodage, via lequel plan lesdits deux ressorts Belleville (26, 27) exercent ladite pression (P) contre les côtés en regard (21b, 22b) des deux éléments de distribution adjacents (21, 22).

4. Plaque de distribution (10) selon l'une quelconque des revendications précédentes, dans laquelle chacun desdits éléments de distribution (21, 22, 23) est associé à des moyens de centrage (15, 15a) qui sont conçus pour centrer et ajuster l'élément de distribution par rapport à la structure dudit moule (12), tout en le laissant en même temps libre de se dilater par rapport aux autres éléments de distribution.

5. Plaque de distribution (10) selon la revendication 4, dans laquelle lesdits moyens de centrage comprennent au moins un élément de centrage (15), sous la forme d'une broche de centrage, d'une seule pièce et en saillie par rapport à l'élément de distribution (21, 22, 23), ladite broche de centrage (15) étant reçue dans un siège correspondant (15a) aménagé dans ledit moule (12).

6. Plaque de distribution (10) selon l'une quelconque des revendications précédentes, dans laquelle lesdits éléments de distribution (21, 22, 23) s'étendent en forme de plaque entre une plaque d'extrémité (12a) et une plaque porteuse de tuyères (12b) dudit moule (12).

7. Plaque de distribution (10) selon l'une quelconque des revendications précédentes, dans laquelle lesdits au moins deux ressorts Belleville (26, 27) ont chacun un diamètre externe (P31) entre 30 et 100 mm et un trou interne (26a; 27a) de diamètre (∅2) entre 20 et 80 mm.

8. Plaque de distribution (10) selon la revendication 7, dans laquelle lesdits au moins deux ressorts Belleville (26, 27) aménagés l'un à côté de l'autre dans ledit espace de séparation (17, D, D') sont identiques et définissent un ensemble ayant une largeur, lorsque les deux ressorts Belleville (26, 27) se trouvent en configuration non déformée, égale à 7,3 mm ou 8,7 mm, le diamètre externe (01) desdits ressorts Belleville étant égal, respectivement, à 50 mm ou 60 mm.

9. Moule pour le moulage de matières plastiques, comprenant une plaque de distribution selon l'une quelconque des revendications 1 à 8.

10. Procédé d'assemblage, sur un moule (12) pour le moulage par injection de matières plastiques, d'une plaque de distribution (10) du type comprenant:
- une pluralité d'éléments ou de modules de distribution (21, 22, 23), séparés l'un de l'autre, définissant intérieurement un réseau de distribution (14) constitué d'une pluralité de canaux d'écoulement chaud (14-1, 14-2, 14-3, etc.) convenant à la distribution d'une matière plastique (MP), à l'état fondu, dans une ou plusieurs tuyères d'injection (32) associées audit moule (12), lesdits éléments de distribution (21, 22, 23) étant à même d'être centrés par rapport audit moule (12) au moyen de broches de centrage respectives (15); et
- un ou plusieurs éléments de raccordement tubulaires (18, 18a, 18b) chacun aménagé pour raccorder les sections de canal d'écoulement (14-1, 14-5) formées dans deux éléments de distribution adjacents (21, 22, 23) de ladite plaque de distribution (10), au moins une extrémité (18b) de chaque élément de raccordement tubulaire (18) convenant pour se couper à coulissement avec l'un (22) desdits éléments de distribution adjacents (21, 22),
dans lequel le procédé d'assemblage comprend les étapes suivantes consistant à:
- monter et centrer lesdits éléments de distribution (21, 22, 23) sur ledit moule (12) tout en raccordant ensemble ceux-ci 21, 22, 23) au moyen desdits un ou plusieurs éléments de raccordement tubulaires 18, 18a, 18b) de sorte que lesdits éléments de distribution (21, 22, 23), une fois montés et centrés par rapport audit moule 12) au moyen desdites broches de centrage 15), soient séparés l'un de l'autre par un espace de séparation 17, D), dans les zones desdits éléments de raccordement tubulaires (18),
et
- loger d'autres moyens d'étanchéité élastiques (24) sous la forme d'au moins deux ressorts Belleville (26, 27), autour de chacun desdits un ou plusieurs éléments de raccordement tubulaires (18), dans ledit espace de séparation (17, D) entre lesdits deux éléments de distribution adjacents (21, 22), dans lequel ladite plaque de distribution (10) est configurée de manière que, lorsqu'elle est assemblée sur ledit moule (12) et se trouve à l'état froid, c'est-à-dire non chauffé, lesdits au moins deux ressorts Belleville (26, 27) soient reçus sensiblement libres et sans contrainte, c'est-à-dire non refoulés et avec un certain jeu dans ledit espace de séparation (17, D),
moyennant quoi, lorsque ladite plaque de distribution (10) est soumise à un chauffage en cours de fonctionnement, les éléments de distribution respectifs (21, 22) se dilatent l'un par rapport à l'autre et provoquent une contraction (D') dudit espace de séparation (17) dans la zone de chaque élément de raccordement tubulaire (18) de sorte que lesdits au moins deux ressorts Belleville (26,
27), reçus dans ledit espace de séparation (17), soient comprimés et coopèrent de manière élastique, en exerçant une pression (P), avec les portions (21b, 22b), en regard dudit espace de séparation (17, D'), des deux éléments de distribution adjacents (21, 22) afin de produire une étanchéité hermétique autour de chacun desdits un ou plusieurs éléments de raccordement tubulaires (18), dans ledit espace de séparation (17, D') et d'assurer ainsi une étanchéité des deux zones de couplage des extrémités (18a, 18b) de chaque élément de raccordement tubulaire (18) avec les deux éléments de distribution adjacents (21, 22), contre toute décharge ou toute fuite vers l'extérieur de la matière plastique (MP) s'écoulant (f1) dans ledit élément de raccordement tubulaire (18).
